## Europäisches Patentamt
## European Patent Office
## Office européen des brevets

(11) Veröffentlichungsnummer: **0 123 155**
**B1**

(12) # EUROPÄISCHE PATENTSCHRIFT

(45) Veröffentlichungstag der Patentschrift:
17.12.86

(51) Int. Cl.⁴: **B 23 C 1/20,** B 27 C 5/10

(21) Anmeldenummer: **84103275.8**

(22) Anmeldetag: **24.03.84**

(54) Oberfräse.

(30) Priorität: 21.04.83 DE 3314419

(43) Veröffentlichungstag der Anmeldung:
31.10.84 Patentblatt 84/44

(45) Bekanntmachung des Hinweises auf die Patenterteilung:
17.12.86 Patentblatt 86/51

(84) Benannte Vertragsstaaten:
AT CH FR GB IT LI SE

(56) Entgegenhaltungen:
US-A-3 587 387
US-A-3 791 260
US-A-4 239 428
US-A-4 319 860

(73) Patentinhaber: FESTO- Maschinenfabrik Gottlieb Stoll, Ulmer Strasse 48, D-7300 Esslingen (DE)

(72) Erfinder: Maier, Peter, Gerokstrasse 1, D-7311 Neidlingen (DE)
Erfinder: Attinger, Karl, Seestrasse 21, D-7311 Holzmaden (DE)
Erfinder: Sigel, Albert, Scholderplatz 21, D-7315 Weilheim (DE)
Erfinder: Hänsel, Gernot, Gerstenstrasse 31, D-7000 Stuttgart 70 (DE)
Erfinder: Kutscher, Erwin, Hohenstaufenstrasse 24, D-7333 Ebersbach- Bünzwangen (DE)
Erfinder: Walter, Hartmut, Im Saemann 71, D-7050 Waiblingen (DE)

(74) Vertreter: Magenbauer, Rudolf, Dipl.- Ing., Patentanwälte Dipl.- Ing. Rudolf Magenbauer Dipl.- Phys. Dr. Otto Reimold Hölderlinweg 58, D-7300 Esslingen (DE)

EP 0 123 155 B1

**Beschreibung**

Die Erfindung betrifft eine Oberfräse mit einem Fräskorb und mit einem Auflagetisch, der über mit dem Fräskorb verbundene Führungssäulen in Achsrichtung eines Fräsers verstellbar und arretierbar ist, sowie mit einer zwischen dem Fräskorb und dem Auflagetisch wirkenden Höhenwerstelleinrichtung, die eine Spindel enthält, die in einer Spindelführung verschraubbar ist und mit dem Auflagetisch in einer lösbaren Anlagestellung koppelbar ist.

Eine derartige Oberfräse ist aus dem DE-.M 74 15 327 bekannt. Sie enthält eine Höhenwerstelleinrichtung mit einer an dem Fräskorb befestigten Hohlspindel, die an ihrem dem Auflagetisch zugewandten Ende ein Innengewinde trägt. Die Hohlspindel ist drehbar und in axialer Richtung unbeweglich am Fräskorb gelagert. Auf dem Auflagetisch der Oberfräse ist ein Gewindestift angeordnet, der sich in fluchtender Stellung mit der Hohlspindel befindet. Zu ihrer lösbaren Koppelung mit dem Auflagetisch ist die Hohlspindel mit ihrem Innengewinde auf den Gewindestift aufschraubbar, und durch ein Drehen der Hohlspindel erfolgt eine Höhenwerstellung des Auflagetisches.

Nachteilig bei dieser Anordnung ist, daß niemals zwei Fräsvorgänge mit unterschiedlichen Frästiefen hintereinander ausgeführt werden können, ohne dabei die zuerst eingestellte Frästiefe zu verlieren. Werden beispielsweise Fräsarbeiten durchgeführt, die eine bestimmte, konstante Frästiefe verlangen, und ist diese Frästiefe mit der Höhenverstelleinrichtung festgelegt, so ist es unmöglich, auch nur kurzfristig Fräsarbeiten mit veränderter Frästiefe zwischenzuschalten, ohne dabei die voreingestellte Frästiefe zu verstellen. Denn notwendigerweise muß die Hohlspindel bei jeder Frästiefenänderung werdreht werden. Ferner ist bei der Oberfräse nach dem DE-GM 74 15 327 nachteilig, daß das Fräswerkzeug bei voreingestellter Frästiefe beim Unterbrechen einer Fräsarbeit immer ungeschützt aus dem Auflagetisch hervorsteht und dadurch insbesondere beim Weglegen der Oberfräse leicht beschädigt werden kann. Hier schafft einzig ein Versenken des Werkzeuges in den Auflagetisch Abhilfe, was aber ein Verstellen der Höhenverstelleinrichtung erfordert, so dß bei Wiederaufnahme der Fräsarbeiten ein neuerliches aufwendiges Einstellen der gewünschten Frästiefe zu erfolgen hat.

Der Prospekt "Das Fräsen" der Firma ELU Eugen Lutz KG zeigt eine Handoberfräse, deren Fräskorb einen Tiefenbegrenzungsstift trägt, der sich mittels einer Feststellschraube lösen und festspannen läßt und der zur Frästiefeneinstellung auf einen am Auflagetisch angeordneten und in Gestalt einer Stellschraube ausgebildeten Anschlagkörper aufläuft. Bei dieser Anordnung ist die geringe Präzision der Frästiefeneinstellung nachteilig. Denn für den Tiefenbegrenzungsstift ist lediglich eine Verschiebeführung vorgesehen, die keine Feineinstellung seiner Höhe erlaubt. Es ist auch praktisch nicht möglich, die in Anlagestellung mit dem Tiefenbegrenzungsstift befindliche Stellschraube nachzujustieren, da ihr Kopf während dieser Anlagestellung für ein Schraubwerkzeug schwer zugänglich ist.

Aus der US-PS 4 319 860 ist ebenfalls eine Oberfräse mit einem gegenüber einem Auflagetisch höhenverschieblichen Fräskörper bekannt. Dabei ist die Frästiefe mittels eines den Fräskorb unterfahrenden Anschlages verstellbar, der über eine Stellschraube in Höhenrichtung justiert werden kann. Der wesentliche Nachteil dieser Anordnung ist die Tatsache, daß die Frästiefe im an den Auflagetisch gekoppelten Zustand des Fräskorbes nicht mehr einstellbar ist, so daß feine Nachjustierungen nicht mehr möglich sind. Bei einer aus der US-PS 4 239 428 bekannten Oberfräse ist zwar eine stufenlose Frästiefenverstellung möglich, doch ist hier der Fräskorb praktisch immer an den Auflagetisch angekoppelt, so daß ein, wenn auch nur kruzfristiges Versenken des Fräswerkzeuges in den Auflagetisch zum Schutze wor Beschädigungen unweigerlich ein Verlieren der voreingestellten Frästiefe zur Folge hat. Die US-PS 3 791 260 beschreibt eine Oberfräse mit einem an einer säulenartigen Führung in Höhenrichtung werstellbar gelagerten Fräskorb. Hier erfolgt die Höhenwerstellung ohne Verwendung einer Spindel und lediglich durch eine Verschiebebewegung. Die Frästiefe ist also nur mit mangelnder Präzision und durch eine an der Führungssäule festklemmbare Anschlagschraube einstellbar. Demgegenüber ist zwar bei der in der US-PS 3 587 387 beschriebenen Oberfräse eine stufenlose Frästiefenverstellung möglich, da der Fräskorb in einem Fortsatz des Auflagetisches höhenwerschieblich gelagert ist und an seinem Aussenumfang ein Umfangsgewinde aufweist, in dem eine sich am Auflagetisch abstützende Verstellmutter läuft. Doch weist auch diese Oberfräse den Nachteil auf, daß der Fräskorb praktisch immer an den Auflagetisch gekoppelt ist, so dan ein kontrolliertes, momentenartiges Versenken des Fräswerkzeuges in den Auflagetisch zum Schutze vor Beschädigungen nicht möglich ist.

Es ist die Aufgabe der Erfindung, eine Oberfräse der eingangs genannten Art zu schaffen, die ohne Wechsel eines der Höhenverstelleinrichtung zugeordneten Werkzeuges sowohl ein schnelles Herstellen bzw. Lösen der Anlagestellung gewährleistet, als auch die Möglichkeit einer stufenlosen präzisen Feinjustierung bietet, derart, dan auch bei eingestellter Frästiefe eine stufenlose Nachregulierung durchführbar ist.

Die obige Aufgabe wird dadurch gelöst, dan die Spindel einen Pendelansatz trägt, der zur schnellen Koppelung des Auflagetisches mit der Spindel unter einen Vorsprung eines dem Auflagetisch zugeordneten Fortsatzes einschwenkbar ist.

Erfindungsgemäß wirkt die Spindel also als Tiefenbegrenzungsstift, der durch ein Verschrauben verstellbar ist, in eine Anlagestellung mit dem Auflagetisch gebracht werden kann, ohne mit diesem werschraubt zu werden, und sich in dieser Anlagestellung durch Anschwenken des Pendelansatzes unter den Vorsprung des dem Auflagetisch zugeordneten Fortsatzes an den Auflagetisch schnell koppeln läßt. Diese Anordnung erlaubt es, bei unter den Fortsatz geschwenktem Pendelansatz mittels des Spindeltriebs eine präzise, stufenlose Feinregulierung der Frästiefeneinstellung worzunehmen, was besonders bequem und bedienungsfreundlich ist. Gleichzeitig kann aber auch durch Wegschwenken des Pendelansatzes die Verbindung zwischen der Spindel und dem Auflagetisch schnell gelöst werden, ohne daß hierbei die Spindel werstellt werden müßte, so daß die woreingestellte Frästiefe und deren Einstellgenauigkeit beibehalten wird. Trotz voreingestellter Frästiefe können also Fräsarbeiten mit veränderter Frästiefe zwischengeschaltet werden, ohne hierbei die beliebig oft reproduzierbare Frästiefeneinstellung zu werlieren. Auch ist für das Fräswerkzeug ein optimaler Schutz wor Beschädigungen gegeben, denn für Unterbrechnungen des Fräsvorganges kann einfach die Verbindung zwischen der Spindel und dem Auflagetisch entkoppelt und das Fräswerkzeug in den Auflagetisch zurückgezogen werden, so daß eine Beschädigung ausgeschlossen ist. Vorteilhafterweise kann also ohne Auswechseln eines Teiles der Höhenwerstellung sowohl ein momentenartiges Herstellen bzw. Lösen der Koppelungsverbindung als auch eine stufenlose Frästiefeneinstellung bzw. -nachjustierung worgenommen werden. .

Bevorzugte Weiterbildungen der Erfindung sind in den Unteransprüchen aufgeführt.

In einer worteilhaften Weiterbildung besitzt die erfindungsgemäße Oberfräse gemäß dem Oberbegriff des Anspruches 2 einen an dem Auflagetisch angeordneten Revolveranschlag, der auf einer Revolverplatte eine Anzahl von mit der Spindel zusammenwirkenden Stellschrauben trägt. Eine derartige Höhenverstelleinrichtung ist ebenfalls aus dem DE-GM 74 15 327 bekannt, wobei sich die Stellschrauben wechselweise in eine fluchtende Stellung mit der Hohlspindel bringen lassen. Bei dieser bekannten Höhenverstelleinrichtung ist jedoch nachteilig, daß kein schneller Wechsel zwischen mehreren, über die Einstellung der Stellschrauben vorgewählten Frästiefen möglich ist. Denn zur Frästiefeneinstellung kann die Hohlspindel immer nur auf einen der Gewindestifte aufgeschraubt werden und wenn die Stellschraube gewechselt bzw. der Revolveranschlag gedreht werden soll, so ist die jeweilige Schraubverbindung zeitaufwendig zu lösen und gleichzeitig geht die Frästiefeneinstellung verloren. Der Revolveranschlag dient also bei der bekannten Anordnung nur dazu, sehr lange Schraubenhübe der Hohlspindel bei der Höhenverstellung zu vermeiden; dagegen ist es nicht möglich, eine Voreinstellung mehrerer Frästiefen worzunehmen und schnell zwischen diesen Frästiefen zu wechseln. Dies ist aber bei einer Weiterbildung der erfindungsgemäßen Oberfräse gemäß dem Kennzeichen des Anspruches 2 wohl möglich, da das Herstellen bzw. Lösen einer Verbindung zwischen der Spindel und einer Stellschraube ohne Betätigen der Spindel selbst durch einfaches Ein- bzw. Ausschwenken des Pendelansatzes erfolgen kann. Es ist also ein momentenartiger Wechsel zwischen werschiedenen Frästiefeneinstellungen möglich, wobei die Genauigkeit der den einzelnen Stellschrauben zugeordneten Einstellungen nicht werloren geht, da die Spindel selbst nicht werstellt werden muß.

Die Weiterbildung nach Anspruch 3 hat den Vorteil, daß der Pendelanschlag auch bei starken Erschütterungen der Oberfräse seine unter den Fortsatz bzw. die Stellschraube geschwenkte Stellung durch eine sichere Klemmverbindung beibehält. Ein aufwendiger Stellschraubenmechanismus ist somit nicht erforderlich.

Die Weiterbildung nach Anspruch 4 schafft die Voraussetzung dafür, daß die einzelnen Stellschrauben des Rewolveranschlages einstellbar bzw. nachjustierbar sind, während gleichzeitig der Auflagetisch an die Spindel angekoppelt ist. Hierdurch wird eine sehr präzise, reproduzierbare Höheneinstellung der Oberfräse gewährleistet es kann an einzelnen Stellschrauben eine nachträgliche Feinjustierung vorgenommen werden, ohne die Frästiefen, die durch die anderen Stellschrauben beestimmt sind, zu beeinflußen.

In der Anordnung gemäß Anspruch 6 ist die Höhenverstelleinrichtung der Oberfräse für die Bedienungsperson auf besonders bequeme Art und Weise zugänglich. Ferner sind hierbei die Lagerpunkte der Führungssäulen an den Ecken eines gedachten gleichschenkligen Dreieck angeordnet, wodurch worteilhafterweise etwaiges Führungspiel an den Führungssäulen ausgeglichen ist, so daß sich insgesamt in Verbindung mit dem Rewolveranschlag eine bessere Lagerung, eine höhere Sicherheit gegen Verkanten des Fräskorbes auf den Führungssäulen und somit eine leichtere Auf- und Abbewegung einstellt.

Um die Möglichkeit einer stufenlosen, präzisen Feinjustierung zu erhalten, die auch bei eingestellter Frästiefe eine stufenlose Nachregulierung möglich macht, kann gemäß Anspruch 7 eine Oberfrase nach dem überbegritt des Anspruches 1 derart ausgebildet werden, daß die dem Fräskorb zugewandte Seite des Auflagetisches eine Bohrung trägt, in der das Ende der Spindel mittels einer Rastfeder verriegelbar ist. Diese Ausführungsform bietet eine sichere Koppelverbindung zwischen dem Fräskorb und dem Auflagetisch, die schnell herstellbar und wieder lösbar ist, unabhängig won der jeweiligen Spindelstellung.

Weitere Vorteile der Erfindung ergeben sich aus der folgenden Beschreibung von Ausführungsbeispielen anhand der Zeichnungen. Es zeigen:

Fig. 1 die Seitenansicht einer Oberfräse;

Fig. 2 die Vorderansicht der Oberfräse mit Blick in Richtung II von Fig.

Fig. 3 eine Draufsicht auf die Oberfräse mit Blick in Richtung III von Fig. 1;

Fig. 4 eine Draufsicht auf einen Auflagetisch der Oberfräse gemäß einer abgewandelten Ausführungsform und

Fig. 5 einen Schnitt durch den Auflagetisch entlang der Linie V-V von Fig. 4.

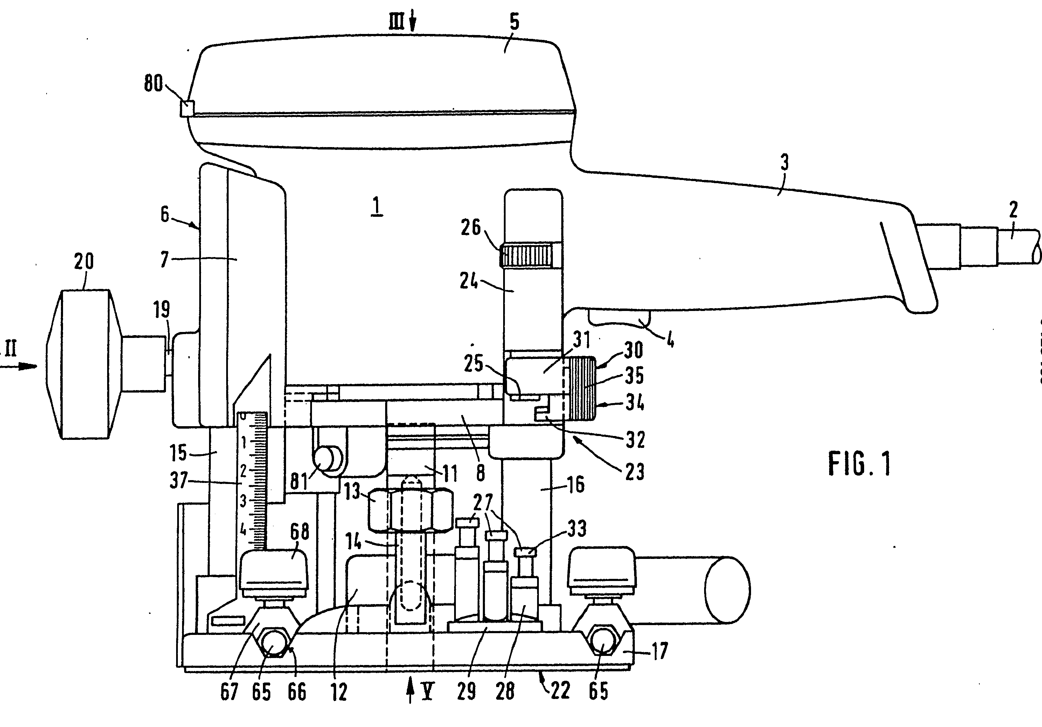

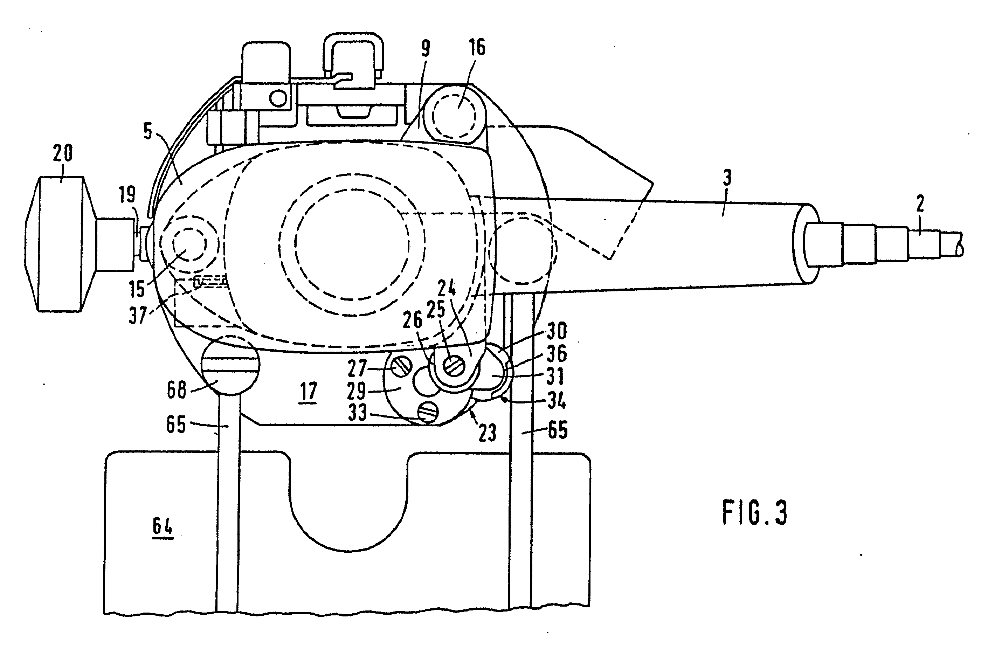

Bezugnehmend zunächst auf Fig. 1, ist eine Oberfräse mit einem Antriebsaggregat 1 dargestellt. Das Antriebsaggregat 1 ist ein Elektromotor, der über ein Kabel 2 mit Strom versorgt wird. Das Kabel 2 mündet dabei in einen Griff 3, vermittels dessen die Oberfräse gehalten und geführt wird. In den Griff 3 ist ein Schalter 4 integriert, mit dem die Stromversorgung des Antriebsaggregats 1 ein- und ausgeschaltet wird. Es ist eine elektronische Drehzahlregelung des Antriebsaggregats 1 vorhanden, damit die Schnittgeschwindigkeit des Fräsers auf dessen Durchmesser und den Werkstoff abgestimmt werden kann. Die elektronische Drehzahlregelung kann durch einen weiteren Drehknopf 80 oder denselben Schalter 4 am vorderen Griffknauf bedient werden, ohne daß der Griff 3 losgelassen werden müßte. Statt des dargestellten Elektromotors kann aber auch ein pneumatisch betriebenes Antriebsaggregat Verwendung finden. Für eine beidhändige Führung der Oberfräse ist das Gehäuseoberteil 5 des Antriebsaggregats so abgerundet, daß es umgriffen werden kann und dabei gut in der Hand liegt. Man entnimmt Fig. 1 die ovale Grundform des Gehäuseoberteils 5 und Fig. 3 seinen näherungsweise elliptischen Querschnitt.

Das Antriebsaggregat 1 wird von einem Fräskorb 6 getragen, der vorzugsweise lösbar mit dem Antriebsaggregat verbunden ist. Der Fräskorb 6 ist ein Profilkörper mit einem abgerundeten Fronteil 7, einer Grundplatte 8 und einem ausladenden Rücken 9. Das Antriebsaggregat 1 steht auf der Grundplatte 8 auf und wird formschlüssig zwischen dem Frontstück 7 und dem Rücken 9 gehalten, wobei noch eine nicht weiter dargestellte Zentrierung vorgesehen ist; der Rücken 9 ist zu diesem Zweck mit einer nach oben offenen U-Ausnehmung versehen, durch die der Griff 3 hindurchragt. In der Grundplatte 8 des Fräskorbs 6 ist eine Öffnung vorgesehen, durch die eine von dem Antriebsaggregat 1 motorisch gedrehte Welle 11 hindurchragt. An der Welle 11 läßt sich ein Fräser 12 festlegen, und zwar vermittels einer Mutter 13, die auf Gewindestücke am Ende der Welle 11 und an dem Schaft 14 des Fräsers 12 aufschraubbar ist. Zum Montieren des Fräsers 12 und Festziehen der Mutter 13 wird vorteilhafterweise die Welle 11 blockiert. Hierzu kann ein Wellenverriegelungsstift 81 dienen. Der Wellenverriegelungsstift wird vorteilhafterweise in einer Halterung an dem Fräskorb 6 verschiebbar geführt, so daß er sich in eine durch die Welle 11 geführte Bohrung einstecken läßt. Die Anordnung eines derartigen Wellenverriegelungsstifts 81 hat den Vorteil, daß nur ein einzelner Spannschlüssel zum Festschrauben des Fräsers 12 erforderlich ist. Man kann daher während dieses Arbeitsgangs die Oberfräse mit einer Hand halten, während mit der anderen Hand die Mutter 13 angezogen wird.

Mit dem Fräskorb 6 ist über Führungssäulen 15; 16 ein Auflagetisch 17 verbunden. Der Auflagetisch 17 läßt sich an den Führungssäulen 15; 16 in Achsrichtung des Fräsers 12 bzw. der Welle 11 in der Höhe verstellen. Die Führungssäulen 15; 16 laufen dabei in Paßbohrungen, die in dem Fräskorb 6 ausgenommen sind. Wie sich aus Fig. 1 - Fig. 3 ergibt, sind zwei annähernd im gleichen Abstand von dem Fräser 12 angeordnete Führungssäulen 15; 16 vorgesehen, von denen die erste 15 in einer Längsmittelebene der Oberfräse liegt. Die zweite Führungssäule 16 ist dagegen seitlich aus der Längsmittelebene ausgestellt. Denkt man sich um den Mittelpunkt der Welle 11 bzw. des Fräsers 12 einen Kreis gelegt, so beträgt der Winkelabstand der Führungssäulen 15; 16 erfindungsgemäß etwa 115° 140° Eine Bedienungsperson, die regelmäßig auf der der zweiten Führungssäule abgewandten Seite der Oberfräse arbeitet, gewinnt durch diese Säulenanordnung ein weitgehend freies Blickfeld auf den Arbeitsbereich des Fräsers 12. Die Paßbohrung für die erste Führungssäule 15 ist in dem abgerundeten Frontstück 7 und die Paßbohrung für die zweite Führungssäule 16 in dem Rücken 9 des Fräskorbs 6 vorgesehen.

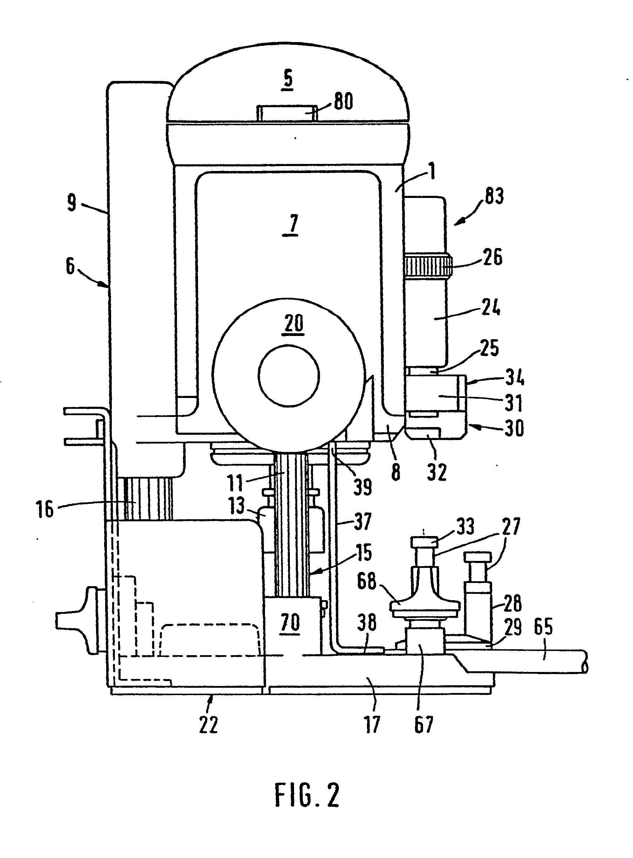

Wie in Fig. 2 und Fig. 3 erkennbar, sind die Führungssäulen 15; 16 in dem dargestellten Ausführungsbeispiel unterschiedlich dimensioniert. Die zweite, außerhalb der Längsmittelebene der Oberfräse liegende Führungssäule 16 ist vergleichsweise massiv ausgelegt, so daß sie den Auflagetisch 17 im wesentlichen trägt. Die erste Führungssäule 15 weist dagegen einen geringeren Durchmesser auf; sie stellt im wesentlichen die Parallelführung des Auflagetisches 17 sicher und wirkt insofern stabilisierend. Weiterhin ist vorgesehen, daß wenigstens eine Führungssäule 16 ein Federelement enthält, vermittels dessen der Auflagetisch 17 von dem Fräskorb 6 weggedrückt wird. In dem dargestellten Ausführungsbeispiel ist dies die zweite, massive Führungssäule 16. Als Federelement dient eine in der Paßbohrung der Führungssäule 16 enthaltene Druckfeder, die zwischen dem Sackboden der Paßbohrung und der Stirnseite der Führungssäule 16 angeordnet ist. Fig. 2 läßt erkennen, daß der Rücken des Fräskorbs 6 im Bereich dieser Paßbohrung nach oben hin verlängert ist, um Raum für die Aufnahme der Druckfeder zu schaffen.

Der Auflagetisch 17 läßt sich in bestimmten Höhenstellungen relativ zu dem Fräskorb 6 arretieren. Zu diesem Zweck ist eine Arretierschraube 19 vorgesehen, die sich mittels eines Festspannknaufs 20 drehen läßt und gegen die erste Führungssäule 15 arbeitet. Durch Anziehen der Arretierschraube 19 wird die Bewegung der Führungssäule 15 in der zugehörigen Paßbohrung blockiert und so die Höheneinstellung fixiert. Diese bestimmt die Frästiefe des Fräsers 12; sie läßt sich kontinuierlich variieren.

Der Auflagetisch 17 besitzt einen Durchbruch 21, durch den sich der Fräser 12 hindurchführen läßt. Der Abstand zwischen dem Auflagetisch 17 und dem Fräskorb 6 wird nun so eingestellt, daß der Fräser 12 um den gewünschten Betrag über die Auflageebene 22 des Auflagetischs hinaussteht; dieser Betrag entspricht der Frästiefe. Für eine Grobeinstellung der Frästiefe wird die Arretierschraube 19 gelöst und der Auflagetisch 17 mit den Führungssäulen 15, 16 um den gewünschten Betrag in die zugehörigen Paßbohrungen eingeschoben, wobei die Kraft der Druckfeder überwunden werden muß. Sodann wird die Arretierschraube 19 wieder festgezogen. Um aber zusätzlich die Möglichkeit zu schaffen, die Frästiefe stufenweise zu verändern und/oder eine Feinregulierung der Höhe vorzunehmen, ist eine Höhenverstelleinrichtung 23 vorgesehen, die zwischen dem Fräskorb 6 und dem Auflagetisch 17 wirkt. Die Höhenverstelleinrichtung 23 ist dabei annähernd symmetrisch zu der zweiten Führungssäule 16 aus der Längsmittelebene der Oberfräse ausgerückt und in ihrem der zweiten Führungssäule 16 gegenüberliegenden Bereich angeordnet. Sie weist eine Spindelführung 24 auf, die fest mit dem Fräskorb 6 verbunden ist. Wie insbesondere aus Fig. 3 ersichtlich, ist die Spindelführung an den Rücken 9 des Fräskorbs angeformt, und zwar von der zweiten Führungssäule 16 her gesehen jenseits der U-Ausnehmung, die den Griff 3 der Oberfräse enthält. An dieser Stelle sei angemerkt, daß der Festspannknauf 20 der Arretierschraube 19 ebenso wie der Griff 3 in der Längsmittelebene der Oberfräse liegt; der Festspannknauf 20 kann deshalb vorteilhafterweise zugleich als zweiter Griff bei einer beidhändigen Führung der Oberfräse dienen. Bezugnehmend wiederum auf Fig. 1, ist in der Spindelführung 24 eine Spindel 25 gelagert, die sich darin durch Drehen eines Stellrads 26 axial versetzen läßt. Das Stellrad 26 ist seinerseits in der Spindelführung 24 drehbar, aber in Axialrichtung unbeweglich gehalten, es ist auf die Spindel 25 aufgeschraubt, die somit bei Drehung des Stellrads 26 ihrer Gewindesteigung entsprechend eine axiale Längsbewegung ausführt. Diese Bewegung erfolgt parallel zu den Führungssäulen 15; 16, d. h. in Hubrichtung des Auflagetischs 17.

Für eine Feineinstellung der Höhe des Auflagetischs 17 läßt sich nun das Ende der Spindel 25 mit diesem in lösbarer Weise koppeln.

In einer bevorzugten Ausführungsform weist der Auflagetisch 17 hierzu wenigstens einen Anschlagbolzen 27 auf, der der Spindel 25 gegenüberliegt, so daß diese bei einer Höhenverstellung des Auflagetischs 17 mit ihrem Ende auf den Anschlagbolzen 27 aufläuft. Der Anschlagbolzen 27 begrenzt dabei die Hubhöhe des Auflagetischs 17; wegen dieser Anschlagwirkung ist es von Vorteil, den Anschlagbolzen 27 seinerseits höhenverstellbar an dem Auflagetisch 17 zu befestigen. In dem dargestellten Ausführungsbeispiel haben dazu die Anschlagschlagbolzen 27 die Gestalt von Stellschrauben, die in geeignete Hülsen 28 einschraubbar sind. Um eine selbsttätige Höhenverstellung der Stellschrauben zu verhindern, sind dabei Präzisionsgewinde mit sehr geringem Gewindespiel oder selbsthemmende Schrauben vorgesehen, so daß für ein Verdrehen der Stellschrauben eine gewisse Reibungskraft überwunden werden muß. Die Anschlagbolzen 27 sind in dem dargestellten Ausführungsbeispiel Teil eines auf dem Auflagetisch 17 befindlichen Revolveranschlags. Wie aus Fig. 1 und Fig. 3 ersichtlich, sind drei Anschlagbolzen 27 vorgesehen, die von einer Revolverplatte 29 getragen werden. Die Revolverplatte 29 hat kreisförmige Gestalt; sie ist drehbar auf den Auflagetisch 17 montiert und zwischen stufenweise versetzten Rastpositionen verstellbar. Auf der Revolverplatte 29 sind um gleiche Winkel versetzt die Hülsen 28 für die Stellschrauben angeordnet, die als Anschlagbolzen 27 dienen; die Anordnung ist dabei so gewählt, daß in den Raststellungen der Revolverplatte 29 je einer der Anschlagbolzen 27 mit der Spindel 25 fluchtet. Wie aus Fig. 1 ersichtlich, stehen die Anschlagbolzen 27 in unterschiedlicher Höhe von der Revolverplatte 29 ab. Jeder dieser Höhenwerte entspricht einer bestimmten Frästiefe, die dadurch eingestellt wird, daß man den zugehörigen Anschlagbolzen 27 in Fluchtstellung mit der Spindel 25 und sodann mit ihrem Ende in Anlage bringt. Durch den Revolveranschlag ist somit eine Wiederholbarkeit von Frästiefen in drei verschiedenen Stufen gewährleistet; diese lassen sich relativ zueinander dadurch verstellen, daß man die Einschraubtiefe der als Anschlagbolzen 27 dienenden Stellschrauben verändert.

Eine Feineinstellung und absolute Justierung der Frästiefe erfolgt vermittels der Spindel 25, die sich zu diesem Zweck an die Anschlagbolzen 27 koppeln läßt. Die Spindel 25 trägt hierzu an ihrem Ende einen Pendelansatz 30. Der Pendelansatz 30 ist an einem Aufhänger 31 angeordnet, der auf die Spindel 25 aufgezogen ist und davon seitlich absteht. Der abstehende Teil des Aufhängers 31 enthält einen Bolzen, um den der Pendelansatz 30 schwenkbar ist,; die Schwenkachse verläuft dabei parallel zu der Spindelachse, fällt aber nicht mit dieser zusammen. Wie insbesondere Fig. 1 zeigt, besitzt der Pendelansatz 30 eine Klaue 32 mit entlang einer schiefen Ebene ansteigender Oberfläche, die geeignet ist, unter den Kopf 33 eines Anschlagbolzens 27 zu fassen, der mit dem Ende der Spindel 25 zur Anlage gebracht wird. Für die Annäherungsbewegung zwischen der Spindel 25 und dem Anschlagbolzen 27 wird aber der Pendelansatz zunächst so weit ausgeschwenkt, daß die Klaue 32 außerhalb der Bewegungsbahn des Kopfes 33 liegt; sobald die gewünschte Anschlagstellung hergestellt ist, wird dann der Pendelansatz 30 zurückgeschwenkt, so daß die Klaue 32 den Kopf 33 hält. Für eine einfache und bequeme Durchführung dieser Schwenkbewegung ist ein Mantelabschnitt 34 des Pendelansatzes 30 mit Riefen 35 versehen. Anhand von Fig. 3 erkennt man, daß der Mantelabschnitt 34 kreiszylindrisch geformt ist und auf einer entsprechend gerundeten Fläche 36 des Aufhängers 31 läuft; die Schwenkachse des Pendelansatzes 30 liegt im Krümmungsmittelpunkt dieser Rundung und damit gegenüber der Spindelachse seitlich ausgekragt.

Durch Einschwenken des Pendelansatzes 30 unter den Kopf 33 eines Anschlagbolzens 27 wird eine schlüssige Verbindung zwischen der Spindel 25 und dem Auflagetisch 17 hergestellt. Nach einem Lösen der Arretierschraube 19 kann, daher durch ein Drehen des Stellrads 26 eine Höhenregulierung des Auflagetischs 17 vorgenommen werden. Entsprechend der Gewindesteigung der Spindel 25, ist dadurch eine Verstellung der Frästiefe um Bruchteile eines Millimeters möglich. Gemäß einer bevorzugten Weiterbildung wird überdies dafür Sorge getragen, daß sich die Anschlagbolzen 27 des Revolveranschlags relativ zueinander mit derselben Genauigkeit in der Höhe justieren lassen. Hierzu ist die Spindel 25 hohl, so daß von oben her der Durchgriff eines Werkzeugs möglich ist, vermittels dessen sich die als Anschlagbolzen 27 dienenden Stellschrauben in den zugehörigen Hülsen verschrauben lassen. Die Verwendung einer Hohlspindel 25 ermöglicht es dabei, diese Höhenverstellung durchzuführen, während die Stellschraube mit dem Ende der Hohlspindel 25 in Anlage steht und vermittels des Pendelansatzes 30 daran festgeklammert ist. Die Anschlagbolzen 27 lassens ich so einstellen und nachjustieren, ohne daß die Anschlagstellung gelöst werden müßte.

Bezugnehmend weiterhin auf Fig. 1, dient zur Messung der Frästiefe ein Skalenträger 37, der zugleich als Endanschlag den maximal einstellbaren Abstand zwischen dem Fräskorb 6 und dem Auflagetisch 17 begrenzt. Der Skalenträger 37 erlaubt eine Bestimmung des Abstands zwischen Fräskopf 6 und Auflagetisch 17, der ein Maß für die Frästiefe ist. Ein Ende des Skalenträgers 37 läßt sich dabei fest mit dem Auflagetisch 17 verbinden, z. B. mittels einer abgewinkelten Lasche 38 verschrauben (vgl. Fig. 2). Das andere Ende 39 des Skalenträgers 37 läuft dagegen lose in einer Gehäuseöffnung des Fräskopfs 6. Für die erwähnte Anschlagwirkung des Skalenträgers 37 ist dieses Ende 39 ebenfalls mit einer abgewinkelten Lasche versehen, die sich in einer Schwenkbewegung in die Gehäuseöffnung einhängen läßt. Beim Zusammenbau der Oberfräse wird zunächst dieses Einhängen vorgenommen und sodann die feste Verbindung des Skalenträgers 37 mit dem Auflagetisch 17 hergestellt. Wird sodann der Auflagetisch 17 relativ zu dem Fräskorb 6 ausgefahren, so erreicht die eingeschwenkte Lasche am Ende ihres Weges den Boden der Gehäusebohrung, durch den sie in geradliniger Bewegung nicht paßt. Sie erreicht dort eine Endlage, in der der Auflagetisch 17 gegen ein weiteres Ausfahren gesperrt ist. Die Anordnung eines in eine Gehäuseöffnung einschwenkbaren Skalenträgers hat also einerseits den Vorteil, auf einfache Weise zugleich als Anschlag zu dienen; weiterhin ist ein derartiger Skalenträger 37 optimal gegen Beschädigungen geschützt. Bevorzugt wird eine Anordnung in dem Frontstück 7 des Fräskorbs 6, wo der Skalenträger 37 die Sicht auf den Fräser 12 in keiner Weise stört und außerdem gut und klar ablesbar ist.

Die erfindungsgemäße Oberfräse kann mit Befestigungsmitteln für einen Parallelanschlag 64 und ähnliches Zubehör versehen sein. Der in Fig. 3 dargestellte Parallelanschlag 64 ist an zwei Rundstangen 65 gehaltert. Im Abstand dieser Rundstangen 65 sind auf der Oberfläche des Auflagetischs 17 zwei Längsnuten ausgenommen, in die sich die Rundstangen 65 einschieben lassen. Die Längsnuten 66 werden wenigstens an einer Stelle durch Stege 67 überbrückt, in denen Stellschrauben 68 in Richtung auf die Rundstangen 65 einschraubbar sind. Vermittels dieser Stellschrauben werden die Rundstangen 65 in der jeweils gewünschten Einstecktiefe arretiert, wodurch ein definierter Abstand zwischen dem Parallelanschlag 64 und der Oberfräse hergestellt wird.

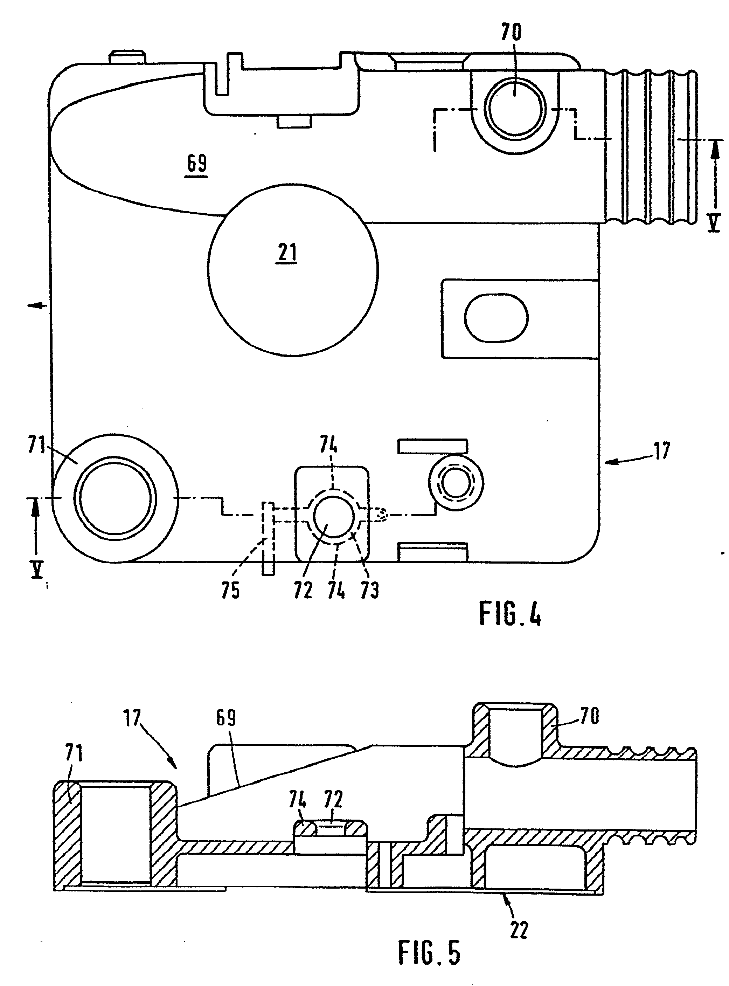

Bezugnehmend nunmehr auf Fig. 4 und 5, ist eine alternative Bauform des Auflagetischs 17 dargestellt. Übereinstimmende Teile sind dabei mit gleichen Bezugszeichen versehen. Man erkennt zunächst den wiederum mittig angeordneten Durchbruch 21 für den Fräser 12. Dagegen sind die Führungssäulen 15, 16, die die Verbindung zu dem Fräskorb 6 herstellen, gegenüber dem ersten Ausführungsbeispiel versetzt angeordnet. Sie befinden sich an diagonal gegenüberliegenden Ecken des Auflagetischs 17; Fig. 6 und 7 zeigen diesbezüglich Sockel 70; 71, die das Ende der Führungssäulen 15, 16 aufnehmen. Die Paßbohrungen in den Sockeln 70, 71 sind auf runde Führungssäulen 15, 16 unterschiedlichen Durchmessers abgestellt. Die Führungssäulen 15, 16 können in den Sockeln 70, 71 beispielsweise durch Sprengringe gehalten sein. Weiterhin ist bei dem dargestellten Auflagetisch 17 eine andere Bauform der erfindungsgemäßen Höhenverstelleinrichtung verwirktlicht, bei der auf besondere Anschlagbolzen 27 verzichtet werden kann. Die dem Fräskorb 6 zugewandte Seite des Auflagetischs 17 trägt danach eine Bohrung 72, in die das Ende der Spindel 25 der Höhenverstelleinrichtung 23 eintaucht und mittels einer Rastfeder 73 verriegelbar ist. Die Spindel 25 trägt dabei an ihrem Ende vorzugsweise einen konischen Kopf und eine diesem nachgeordnete, umlaufende Kerbe. Die dargestellte Rastfeder 73 ist in der Bohrung 72 gelagert; sie weist zwei spreizbare, im Eingriffsbereich des Spindelkopfes halbkreisförmig abgerundete Lamellen 74 auf, die geeignet sind, rastend in die Kerbe der Spindel 25 einzufallen und so eine Kopplung zwischen der Spindel 25 und dem Auflagetisch 17 herzustellen. Um diese Raststellung zu lösen, ist ein Entarretierknopf 75 vorgesehen. Bei Druck auf den Entarretierknopf 75 spreizen sich die Lamellen 74 der Rastfeder 73, und die Verriegelungsstellung des Spindelkopfes wird aufgehoben.

Die hier beschriebene Oberfräse ist in mehrfacher Hinsicht ergonomisch besonders günstig. Auf die verschiedenen, in der Längsmittelebene der Oberfräse liegenden Griffmöglichkeiten wurde bereits verwiesen. Die Höhenverstelleinrichtung 23 in Verbindung mit der druckfederbelasteten Abstandshalterung des Auflagetischs 17 ermöglicht eine Feineinstellung der Frästiefe, ohne daß eine Zug- oder Druckkraft auf den Auflagetisch 17 ausgeübt werden müßte; die für seine Verstellung erforderliche Kraft wird vielmehr von dem Federelement in der Führungssäule aufgebracht. Die Feineinstellung kann dadurch mit dem Daumen bei laufender Maschine vorgenommen werden, ohne daß die Bedienungsperson die Hand von dem Griff 3 lösen müßte. Die Drehzahl des Antriebsaggregats 1 läßt sich verändern und die Feineinstellung des Höhenanschlags vornehmen, ohne daß ein Bedienungsgriff losgelassen werden müßte, und im übrigen ist ein flexibles, sicheres Fräsen mit großem Gesichtsfeld gewährleistet. Durch die elektronische Drehzahlregelung ergibt sich eine Erhöhung der Vielseitigkeit und eine Vervielfältigung der Einsatzgebiete. Schließlich sei noch erwähnt, daß die Aufnahme für den Gleitanschlag am Gehäuse der Oberfräse auch als Stützpunkt für-ihren Einbau in Stationärtische oder Stative verwendet werden kann.

**Patentansprüche**

1. Oberfräse mit einem Fräskorb (6) und mit einem Auflagetisch (17), der über mit dem Fräskorb verbundene Führungssäulen (15, 16) in Achsrichtung eines Fräses (12) verstellbar und arretierbar ist, sowie mit einer zwischen dem Fräskorb und dem Auflagetisch wirkenden Höhenverstelleinrichtung, die eine Spindel (25) enthält, die in einer Spindelführung (24) verchreubbar ist und mit dem Auflegetisch in einer lösberen Anlegestellung koppelbar ist, dadurch gekennzeichnet, deß die Spindel (25) einen Pendelansatz (30) trägt, der zur schnellen Koppelung des Auflagetieches (17) mit der Spindel (25) unter einen Vorsprung (33) eines dem Auflagetisch Zugaordneten Fortsatzes (27) einschwenkbar ist.

2. Oberfräse nach Anspruch 1, bei der die Höhenveratelleinrichtung eine auf dem Auflagetisch (17) angeordnete Stellschraube (27) oder einen Revolverenschlag enthält, der auf einer Revolverplatte (29) eine Anzahl von mit der Spindel (25) zusammenwirkenden Stellschrauben (27) trägt, dadurch gekennzeichnet, daß der Pendelansatz (30) unter den Kopf der Stellschraube (27) einschwenkbar ist.

3. Oberfräse nach Anspruch 1 oder 2, dadurch gekennzeichnet, daß an dem Pendelansatz (30) eine Klaue (32) angeformt ist, deren eine in Richtung der Spindel weisende überfläche Zur verspannbaren Koppelung des Auflagetischss (17), mit der Spindel (25) in Form einer ansteigenden schiefen Ebene ausgebildet ist.

4. Oberfräse nach Anspruch 2 oder 3, dadurch gekennzeichnet, daß die Spindel (25) hohl ist und den Durchgriff eines Werkzeuges gestattet, vermittels dessen die in Anlagestellung mit der Spindel (25) befindliche Stellschraube (27) zur Höhenjustierung verechraubbar ist.

5. Oberfräse nach einem der Ansprüche 1 bis 4, mit einem zur Bestimmung der Frästiefs dienenden Skalenträger (37), dadurch gekennzeichnet, daß der Skalenträger (37) Zugleich als Endanschlag den maximal einstellbaren Abstand Zwischen Fräskorb (6) und Auflagetisch (17) begrenzt, wobei ein Ende des Skalenträgers (3) fest mit Auflagetisch, (17) verbindbar ist, während des andere Ende loss ner Gehäuseöffnung des Fräskorbes (6) läuft.

6. Oberfräse nach einem der Ansprüche 1 bis 5, dadurch gekennzeichnet, daß von den zur Führung des Auflagetisches (17) am Fräs (6) während der Höhenveretellung dienenden Führungssäulen (15, 16) die eine (16) massiv ausgelegt ist und den Auflagetisch im wesentlichen trägt, während die andere (15) stabilisienrend wirkt, und daß die stabilisierende Führungssäule (15) in der Längsmittelebens der Oberfräse liegt und die massive Führungssäule (16) auf einem um den Fräser (12) gelegten Kreis um ca. 115° bis 140° winkelversetzt von der stabilisisrenden Führungssäuls (15) angeordnet ist.

7. Oberfräse nach dem Oberbegriff des Anspruches 1, dadurch gekennzeichnet, daß die dem Fräskorb (6) zugewandte Seite des Auflagetisches (17) eine Bohrung (72) trägt, in der das Ende der Spindel (25) mittels einer Rastfeder. (73) verriegelbar ist.

8. Oberfräse nach Anspruch 7, dadurch gekennzeichnet, daß die Spindel (25) an ihrem Ende einen konischen Kopf und eine diesem nachgeordnete, umlaufende Kerbe aufweist, und die Rastfeder (73) zwei spreizbare, im Eingriffsbereich des Kopfes halbkreisförmig abgerundete Lamellen (74) aufweist, die geeignet sind, restend in die Kerbe einzufallen.

## Claims

1. A routing machine with a cage (6) and a supporting table (17) adjustable and lockable in the axial direction of a cutter (12) by means of guide columns (15, 16) linked to the cage, and with a height adjustment device acting between the cage and the supporting table, said height adjustment device containing a spindle (25) adjustable in a spindle guide (24) and capable of being coupled to the supporting table in a detachable locating position, wherein the spindle (25) carries a floating projection (30) which can be pivoted below a projection (33) of an extension piece (27) associated with the supporting table (17) for the quick coupling of the supporting table (17) with the spindle (25).

2. A routing machine as claimed in Claim 1, whose height adjustment device contains a set screw (27) located on the supporting table (17) or a turret stop with a plurality of set screws (27) acting in conjunction with the spindle (25) and arranged on a turret plate (29), wherein the floating projection (30) is pivotable below the head of the set screw (27).

3. A routing maching as claimed in Claim 1 or 2, wherein the floating projection (30) is provided with an integral claw (32), the surface of the claw which faces the spindle having the form of an ascending oblique plane for the lockable coupling of the supporting table (17) with the spindle (25).

4. A routing machine as claimed in Claim 2 or 3, wherein the spindle (25) is hollow and permits the insertion of a tool by means of which the set screw (27) in locating position with the spindle (25) can be loosened or tightened for height adjustment.

5. A routing machine as claimed in any of Claims 1 to 4, equipped with a scale device (37) for messuring the routing depth, wherein the scale device (37) is simultaneously used as an end stop limiting the maximum adjustment between cage (6) and supporting table (17), one end of the scale device (37) being lockable to the supporting table (17) while the other end is movable in a housing opening of the cage (6).

6. A routing machine as claimed in any of Claims 1 to 5, wherein one (16) of the guide columns (15, 16) guiding the supporting table (17) on the cage (6) during the height adjustment process is solid in construction snd essentially carries the supporting table (17), while the other (15) acts as a stabiliser, and wherein the stabilising guide column (15) extends in the axial centre plane of the routing machine, while the solid guide column (16) is arranged on a circle drawn round the cutter (12) with a 115° to 140° offset from the stabilising guide column (15).

7. A routing machine as claimed in the preamble of Claim 1, wherein that side of the cage (6) which faces the supporting table (17) is provided with a bore (72) in which the end of the spindle (25) is lockable by means of a detent spring (73).

8. A routing machine as claimed in Claim 7, wherein the end of the spindle (25) has a conical head and a revolving notch arranged thereafter, and wherein the detent spring (73) is provided with two expandable lamellae of semicircular shape (74) in the area of the engagement of the head which are capable of locking engagement in the notch.

## Revendications

1. Défonceuse, avec une tête porte-fraise (6), avec un plateau (17) qui peut être déplacé et bloqué dans la direction axiale d'une fraise (12) par l'intermédiaire de colonnes de guidage (15, 16) assemblées à la tête porte-fraise, et avec un dispositif de déplacement vertical agissant entre la tête porte-fraise et le plateau, qui comporte une broche (25) qui peut être vissée dans un guide de broche (24) et qui peut être accouplée au plateau dans une position annexe amovible, caractérisée en ce que la broche (25) porte une pièce rapportée oscillante (30) qui, en vue de l'accouplement rapide du plateau (17) à la broche (25), peut être rentrée par pivotement sous un épaulement (33) d'une pièce en saillie (27) associée au plateau.

2. Défonceuse selon la revendication 1, où le dispositif de déplacement vertical comporte une vis d'arrêt (27) disposée sur le plateau (17) ou une butée revolver qui porte sur une plaque revolver (29) plusieurs vis d'arrêt (27) coopérant·avec la broche (25), caractérisée en ce que la pièce rapportée oscillante (30) peut être rentrée par pivotement sous la tête de la vis d'arrêt (27).

3. Défonceuse selon la revendication 1 ou 2, caractérisée en ce qu'une griffe (32) est formée sur la pièce rapportée oscillante (30), griffe dont une surface tournée vers la broche est, en vue de l'accouplement à serrage du plateau (17) à la broche (25), est configurée sous la forme d'un plan incliné à pente ascendante.

4. Défonceuse selon la revendication 2 ou 3, caractérisée en ce que la broche (25) est creuse et permet le passage d'un outil au moyen duquel la vis d'arrêt (27) qui est accouplée avec la broche (25) peut être vissée en vue d'un ajustement en hauteur.

5. Défonceuse selon une des revendications 1 à 4, avec un support de graduation (37) servant à déterminer la profondeur de fraisage, caractérisée en ce que le support de graduation (37) sert simultanément de butée de fin de course limitant la distance maximale réglable entre la tête porte-fraise (6) et le plateau (17), une extrémité du support de graduation (37) pouvant être assemblée fixement au plateau (17), tandis que l'autre extrémité s'étend librement dans une ouverture du carter de la tête porte-fraise (6).

6. Défonceuse selon une des revendications 1 à 5, caractérisée en ce que, des deux colonnes de guidage (15, 16) servant à guider le plateau (17) contre la tête porte-fraise (6) pendant le déplacement vertical, l'une (15) est massive et porte l'essentiel du plateau, tandis que l'autre (15) a une action stabilisatrice, et en ce que la colonne de guidage stabilisatrice (15) se trouve dans le plan longitudinal médian de la défonceuse, tandis que la colonne de guidage massive (16) est disposée sur un cercle ayant pour centre la fraise (12), en étant décalée angulairement d'environ 115° à 140° par rapport à la colonne de guidage stabilisatrice (15).

7. Défonceuse selon le préambule de la revendication 1, caractérisé en ce que le côté du plateau (17) qui est tourné vers la tête porte-fraise (6) porte un alésage (72) dans lequel l'extrémité de la broche (25) peut être verrouillée au moyen d'un ressort à cran d'arrêt (73).

8. Défonceuse selon la revendication 7, caractérisée en ce que la broche (25) présente à son extrémité une tête conique qui est suivie d'une rainure circulaire, et en ce que le ressort à cran d'arrêt (73) présente deux lamelles écartables (74), arrondies en forme de demi-cercle dans la zone d'engagement de la tête, qui peuvent s'enclencher dans la rainure.

FIG. 1

FIG. 2

FIG.3

FIG. 4

FIG. 5